# EUROPÄISCHE PATENTSCHRIFT

(11) **EP 4 297 885 B1**
(45) Veröffentlichungstag und Bekanntmachung des Hinweises auf die Patenterteilung: **26.06.2024**
(21) Anmeldenummer: 21831033.2
(22) Anmeldetag: 14.12.2021
(51) Int. Cl.: B01D 33/23, D21D 5/04

(54) **FILTERSEKTOR FUER EINE FILTERSCHEIBE UND SCHEIBENFILTER MIT EINEM FILTERSEKTOR**
FILTER SECTOR FOR A FILTER DISK AND DISK FILTER WITH A FILTER SECTOR
SECTEUR DE FILTRE POUR UN DISQUE DE FILTRE ET FILTRE À DISQUE DOTÉ D'UN SECTEUR DE FILTRE

(30) Priorität: 26.02.2021 AT 501332021
(43) Veröffentlichungstag der Anmeldung: 03.01.2024
(73) Patentinhaber: Andritz AG, 8045 Graz (AT)
(72) Erfinder: EGGER, Markus, 8020 Graz (AT); MAGOR, Wolfgang, 8062 Kumberg (AT); STELZER, Daniel, 8663 Veitsch Graz (AT); BUCHBERGER, Erwin, 8283 Bad Blumau (AT)
(74) Vertreter: Anzel, Andreas
(86) Internationale Anmeldenummer: PCT/EP2021/085704
(87) Internationale Veröffentlichungsnummer: WO 2022/179738

(56) Entgegenhaltungen:
- DE-A1-102016 219 235
- DE-A1-102017 107 665
- SE-C2- 528 029
- US-A1- 2006 261 001

## Beschreibung

Die Erfindung betrifft einen Filtersektor für eine rotierende Filterscheibe eines Scheibenfilters umfassend zumindest eine perforierte und strukturierte Filterplatte und einen Innenraum des Filtersektors, wobei die Filterplatte zur Abtrennung von Flüssigkeit aus einer Suspension über den Innenraum des Filtersektors besaugbar ist. Die Erfindung betrifft weiter einen Scheibenfilter mit einem erfindungsgemäßen Filtersektor.

Scheibenfilter werden zur Abtrennung von Flüssigkeit aus einer Suspension und im Bereich der Zellstoff und Papierherstellung verwendet. In letzterem Anwendungsfeld erlauben Scheibenfilter insbesondere auch eine Rückgewinnung von Faserstoff aus Fasersuspensionen.

Typischerweise bilden mehrere Filtersektoren eine Filterscheibe, wobei die Filterscheibe im Scheibenfilter rotierend ausgeführt ist. In der Regel ist die Filterscheibe bzw. sind die Filtersektoren mit einer Hohlwelle verbunden, wobei die Filtersektoren über die Hohlwelle besaugbar sind. Infolge der Besaugung der Filtersektoren wird Flüssigkeit aus der Suspension in den Innenraum des Filtersektors gesaugt und Feststoff, beispielsweise Faserstoff, wird auf den Filterplatten abgeschieden, wobei sich ein Filterkuchen auf der Filterplatte ausbildet. Der Filterkuchen wird an geeigneter Stelle im Scheibenfilter von dem Filtersektor abgenommen, beispielsweise über Schaber, womit der Filtersektor bereit für einen neuerlichen Filtrationsvorgang ist. Generell wird versucht, die Filtersektoren so auszugestalten, dass eine möglichst große Abscheideleistung des Filtersektors bzw. eine möglichst große Effizienz des Scheibenfilters erzielt wird. Gleichzeitig handelt es sich bei den Filtersektoren um mechanisch belastete Bauteile mit entsprechenden Anforderungen hinsichtlich Steifigkeit, wobei die Filtersektoren wiederum eine mechanische Belastung der Hohlwelle verursachen.

So offenbart die DE 10 2017 118050 A1 einen Filtersektor für einen Scheibenfilter, wobei der Filtersektor perforierte und mit einem Wellenprofil versehene Filterplatten umfasst und das Wellenprofil eine bestimmte Anordnung von Tälern und Bergen aufweist. Dabei sorgt das Wellenprofil für eine Vergrößerung der für die Entwässerung zur Verfügung stehenden Oberfläche und führt so zu einer verbesserten Effizienz des Scheibenfilters.

Es ist zu beachten, dass entsprechend dem Stand der Technik eine Vergrößerung der Oberfläche der Filterplatte oft auch eine vergrößerte Masse des Filtersektors bedeutet und Filterscheiben mit größeren Massen auch größere mechanische Belastungen der Hohlwelle bedeuten. Gerade im Fall einer Umrüstung bestehender Scheibenfilter bleibt die Hohlwelle unverändert, die umgerüsteten, schwereren Filtersektoren können dann aber mittel- bzw. langfristig zu einem Versagen der Hohlwelle führen.

Weiter offenbart die US2006261001A1 einen Filtersektor für eine rotierende Filterscheibe, wobei eine Filtratkammer zwischen einem ersten starren Netz und einem zweiten starren Netz ausgebildet ist, wobei die starren Netze profilierte Filtrationswände ausbilden und Kavitäten und Höcker aufweisen, wobei jede Kavität und jeder Höcker aus einer Vielzahl von Maschen des Netzes gebildet wird. Vorteilhafterweise werden spezielle Webetechniken zur Ausbildung der Kavitäten und Höcker verwendet.

Die US10894226B2 wiederum offenbart ein Filterelement eines Rotationsscheibenfilters umfassend zwei Filterplatten, die perforiert und profiliert sind, wobei mindestens eine Filterplatte einen wellenförmigen Querschnitt aufweist und jede Außenseite der Filterplatten Erhebungen aufweist, deren Querschnitt rund oder länglich ist.

Die DE102017107665A1 schließlich offenbart Filterscheiben für einen Scheibenfilter, wobei kreissektorförmige Filtersektoren mit Filterplatten ausgebildet sind, welche eine Vielzahl an Perforationsöffnungen aufweisen. Insbesondere ist ein aus einem wellenförmigen Profilblech ausgebildeter Filtersektor mit ebenen Filterplatten und kreisrunden Vertiefungen offenbart.

Ziel der Erfindung ist ein Filtersektor für einen Scheibenfilter, der eine Steigerung der Abscheideleistung bzw. eine gesteigerte Effizienz des Scheibenfilters erlaubt. Weiter ist es ein Ziel, eine Effizienzsteigerung bei gleichzeitig reduziertem Materialeinsatz am Filtersektor zu erreichen. Und schließlich sollen die Filtersektoren auch ein verbessertes Ablöseverhalten des Filterkuchens, bzw. der Fasermatte, aufweisen Dies gelingt erfindungsgemäß dadurch, dass die Filterplatte zumindest eine Wölbstruktur mit einer polygonalen Basis umfasst. Unter polygonaler Basis ist eine im Wesentlichen ebene geometrische Figur zu verstehen, die durch einen geschlossenen Zug aus Teilstrecken gebildet wird. Entsprechend ist unter Wölbstruktur eine über dieser Basis gebildete Schale zu verstehen. Der Begriff Schale bezeichnet einen Körper, der gewölbt ist und dessen Dicke kleiner ist als dessen übrigen Abmessungen. Bevorzugt ist die Schale gewölbt und frei von Kanten. Frei von Kanten bezieht sich dabei auf die Form der Schale. Da die Wölbstruktur an sich perforiert ist, treten natürlich Kanten an den Perforierungen auf, welche unerheblich für die Form der Schale sind. Die Ausbildung der Filterplatte mit erfindungsgemäßen Wölbstrukturen hat eine positive Wirkung auf die Abscheideleistung, da die Filterplatte über die Wölbstruktur eine vergrößerte Oberfläche ausbildet und die vergrößerte Oberfläche direkt eine Effizienzsteigung erlaubt. Überraschenderweise wurde festgestellt, dass die Ausbildung der Filterplatte mit einer Wölbstruktur mit einer polygonalen Basis eine positive Wirkung auf die Festigkeit der Filterplatte hat, wodurch selbst bei einem reduzierten Materialeinsatz an der Filterplatte, ausreichende Festigkeits- bzw. Steifigkeitswerte der Filterplatte erzielt werden können. Derart können die Filterplatte und somit der Filtersektor leichter ausgeführt werden. Mit der gleichzeitig gegebenen Vergrößerung der Oberfläche der Filterplatte ist so ein unerwarteter synergistischer Effekt gegeben. Vorteilhafterweise umfasst eine erfindungsgemäße Filterplatte eine Vielzahl der erfindungsgemäßen Wölbstrukturen. Ebenso vorteilhafterweise kann die Strukturierung der Filterplatte zumindest abschnittsweise variieren. Erfindungsgemäß ist die polygonale Basis der Wölbstruktur ein Sechseck.

Eine vorteilhafte Ausgestaltung des Filtersektors ist dadurch gekennzeichnet, dass die polygonale Basis der Wölbstruktur ein gleichseitiges Sechseck ist. Durch Ausgestaltung der Basis der Wölbstrukturen als Sechseck und insbesondere als gleichseitiges Sechseck, sind die erfindungsgemäßen Vorteile besonders ausgeprägt. Neben der Vergrößerung der Oberfläche der Filterplatten durch die Wölbstrukturen, ist die Verwendung einer sechseckigen Basis besonders vorteilhaft in Bezug auf eine verbesserte Festigkeit bzw. Steifigkeit der Filterplatte, wodurch der Materialeinsatz weiter reduziert werden kann. Der synergistische Effekt, d.h. die Steigerung der Effizienz des Filtersektors und gleichzeitig der verringerte Materialeinsatz bei gleichbleibender Festigkeit bzw. Steifigkeit, ist besonders ausgeprägt.

Optional kann die als Sechseck mit sechs Teilstrecken ausgebildete Basis an zwei einander gegenüberliegenden Teilstrecken als Sattelflächen ausgebildet sein und an den weiteren vier Teilstrecken in Form von zwei gegenüberliegenden Kammflächen ausgebildet sein, wobei jeweils zwei Teilstrecken eine Kammfläche bilden und die Kammflächen durch die Sattelflächen verbunden sind. So liegen die vier weiteren Teilstrecken der Basis im Wesentlichen in einer Ebene, wobei ein jeweiliger Pass der Sattelfläche zwischen der Ebene und dem Innenraum angeordnet ist. Diese Ausgestaltung der Wölbstruktur mit Sattelflächen an zwei gegenüberliegenden Teilstrecken der Basis hat einen weiteren positiven Effekt auf die Festigkeit bzw. Steifigkeit der Filterplatte. Eine Strömung einer Flüssigkeit im Innenraum des Filtersektors erfolgt dann auch bevorzugt in Richtung der Kammflächen.

Eine weitere vorteilhafte Ausgestaltung des Filtersektors ist dadurch gekennzeichnet, dass die Wölbstruktur in den Innenraum des Filtersektors orientiert ist und somit aus dem Innenraum in Richtung der Filterplatte gesehen konvex ausgebildet ist. Dabei umfasst der Filtersektor einen Innenraum, der zumindest durch die umgebenden Filterplatten begrenzt ist. Wird der Innenraum mit einer Unterdruckquelle in Verbindung gebracht, so wird durch die Filterplatten Flüssigkeit aus der den Filtersektor umgebenden Suspension angesaugt, wobei an der Oberfläche der Filterplatten ein Filterkuchen, z.B. eine Fasermatte, ausgebildet wird. Vorteilhafterweise weisen die Wölbstrukturen eine Höhe von bis zu 25 mm, bevorzugt bis zu 10 mm, über der Basis auf. Diese hat unerwarteter Weise eine positive Wirkung auf das Ablöseverhalten bzw. Abrollverhalten des Filterkuchens, bzw. der Fasermatte, vom Filtersektor. Bei mit einem Wellenprofil ausgeführten Filterplatten kann beispielsweise die Orientierung des Wellenprofils das Ablösen des Filterkuchens erschweren, da während des Abrollens des Filterkuchens bzw. der Fasermatte die Orientierung der Welle und die Abrollrichtung divergieren, wodurch der Abrollvorgang behindert wird. Hingegen bildet ein Filtersektor mit den vorteilhaften Wölbstrukturen keine Vorzugsrichtung aus, wirkt quasi-isotrop, womit auch keine Divergenz zu einer Abrollrichtung des Filterkuchens bzw. der Fasermatte gegeben ist.

Eine ebenso günstige Ausgestaltung des Filtersektors ist dadurch gekennzeichnet, dass die Filterplatte Perforierungen mit einem hydraulischen Durchmesser von 0,2 mm bis 3 mm, bevorzugt 0,4 mm bis 0,8 mm und beispielsweise 0,6mm, aufweist. So lässt sich ein gutes Verhältnis aus Permeation und Retention sicherstellen. Typischerweise finden kreisrunde Bohrungen Verwendung, wobei dann der hydraulische Durchmesser und der Kreisdurchmesser entsprechen. Es sind aber auch abweichende Geometrien (oval, geschlitzt, etc.) mit obigen hydraulischen Durchmessern für die Perforierungen möglich, wobei der hydraulische Durchmesser als Quotient aus der vierfachen Fläche der Perforierung und dem Umfang der Perforierung definiert ist. Ebenso vorteilhaft ist es die Filterplatte mit einer offenen Fläche von 10% bis 40%, insbesondere von 15% bis 30%, auszuführen.

Eine vorteilhafte Ausführung des Filtersektors ist dadurch gekennzeichnet, dass eine Teilstrecke der polygonalen Basis einer ersten Wölbstruktur zugleich als Teilstrecke der polygonalen Basis einer zweiten Wölbstruktur ausgebildet ist. Vorteilhafterweise umfasst eine Filterplatte eine Vielzahl von Wölbstrukturen, wobei die einzelnen Wölbstrukturen unmittelbar aneinander angrenzen. Dies bedeutet, dass eine Teilstrecke der polygonalen Basis einer ersten Wölbstruktur zugleich auch Teilstrecke der polygonalen Basis einer zweiten angrenzenden Wölbstruktur ist. So kann eine dichte Anordnung der Wölbstrukturen erzielt werden, wodurch eine große Oberfläche der Filterplatte ermöglicht wird. Zudem wirkt sich eine dichte Anordnung auch positiv auf Festigkeit bzw. Steifigkeit der Struktur aus.

Eine besonders vorteilhafte Ausführung des Filtersektors ist dadurch gekennzeichnet, dass die polygonale Basis einer ersten Wölbstruktur aus Teilstrecken gebildet ist, wobei jede Teilstrecke der polygonalen Basis der ersten Wölbstruktur auch als Teilstrecke der polygonalen Basis der die erste Wölbstruktur umgebenden Wölbstrukturen ausgebildet ist. In dieser besonders dichten Anordnung der Wölbstrukturen ist eine erste Wölbstruktur an jeder Teilstrecke bzw. Seite der polygonalen Basis von einer weiteren angrenzenden Wölbstruktur umgeben. So wird eine große Oberfläche der Filterplatte ermöglicht, mit einer vorteilhaften Festigkeit bzw. Steifigkeit der Struktur.

Eine weitere vorteilhafte Ausführung des Filtersektors ist dadurch gekennzeichnet, dass die perforierte und strukturierte Filterplatte ein wölbstrukturiertes Lochblech ist. Dabei ist der Prozess der Wölbstrukturierung beispielsweise offenbart in der EP 0693 008 A1. Eine so umgeformtes Lochblech erlaubt die Realisierung einer vorteilhaften Wölbstruktur, z.B. mit einer als Sechseck und insbesondere als gleichseitiges Sechseck ausgebildeten Basis. Ebenso weisen so umgeformte Lochbleche sehr vorteilhafte Festigkeits- bzw. Steifigkeitseigenschaften auf und erlauben eine Bereitstellung von Filtersektoren mit geringem Materialeinsatz.

In einer günstigen Ausgestaltung ist der Filtersektor kreissektorförmig ausgebildet. Dabei bilden typischerweise mehrere Filtersektoren ein Filterscheibe eines Scheibenfilters. Die kreissektorförmige Ausbildung erlaubt eine besonders einfache Zusammensetzung der Filterscheibe aus mehreren Filtersektoren.

In einer besonders vorteilhaften Ausführung ist der Filtersektor am Umfang einer Hohlwelle befestigt. Dabei erstrecken sich die Filterplatten im Wesentlichen in Radialrichtung und Umfangsrichtung der Hohlwelle. Beidseits des Innenraums des Filtersektors sind einander gegenüberliegende Filterplatten angeordnet, wobei die Wölbstrukturen der gegenüberliegenden Filterplatten entweder symmetrisch zum Innenraum angeordnet sind oder zueinander in radialer Richtung zur Hohlwelle um eine halbe Basis versetzt angeordnet sind. Wie schon erläutert umfasst der Filtersektor einen Innenraum, der durch die umgebenden Filterplatten begrenzt ist. Bei Anordnung der gegenüberliegende Filterplatten symmetrisch zum Innenraum können die Filterplatten beispielsweise einander berührend angeordnet werden, wobei einander gegenüberliegende Wölbflächen einander berühren. An den Berührpunkten der Wölbflächen können die gegenüberliegenden Filterplatten beispielsweise durch Punktschweißung verbunden werden, und kann so die Festigkeit des Filtersektors erhöht werden.

Bei einer versetzten Anordnung der gegenüberliegenden Filterplatten, mit einem Versatz um eine halbe Basis in radialer Richtung zur Hohlwelle, kann ein gegenseitiges Berühren der Filterplatten vermieden werden. Im Innenraum werden so Strömungshindernisse vermieden, was vorteilhaft für die Abscheideleistung des Filtersektors bzw. die Effizienz des Scheibenfilters ist.

Die Erfindung betrifft auch einen Scheibenfilter mit einer rotierenden Hohlwelle und zumindest einer Filterscheibe, wobei die Filterscheibe mehrere erfindungsgemäße Filtersektoren umfasst. Die Filtersektoren erstrecken sich im Wesentlichen in Radialrichtung und Umfangsrichtung der Hohlwelle. Weiter sind die Filtersektoren am Umfang der Hohlwelle angeordnet und über die Hohlwelle besaugbar, wobei die aus einer Suspension abgetrennte Flüssigkeit aus dem Innenraum des Filtersektors im Wesentlichen in einer Radialrichtung der Hohlwelle zuführbar ist. Die Radialrichtung ist dabei als Radialrichtung der Hohlwelle zu verstehen. Scheibenfilter mit den erfindungsgemäßen Filtersektoren weisen eine vorteilhafte Abscheideleistung bzw. eine gesteigerte Effizienz auf, wobei dies bei gleichzeitig reduziertem Materialeinsatz möglich wird.

Eine weitere vorteilhafte Ausgestaltung des Scheibenfilters ist dadurch gekennzeichnet, dass die Filterplatte eine Vielzahl von aneinander angrenzenden Wölbstrukturen umfasst, die Basis der Wölbstrukturen ein Sechseck und insbesondere ein gleichseitiges Sechseck ist, wobei die Filterplatte so zur Hohlwelle ausgerichtet ist, dass eine Verbindungslinie der Mittelpunkte gegenüberliegender Teilstrecken der Basis im Wesentlichen zur Hohlwelle zeigt. Eine derart ausgerichtete Filterplatte mit aneinander angrenzenden Wölbstrukturen erlaubt eine vorteilhafte Führung der Flüssigkeit aus dem Innenraum des Filtersektors in Richtung der Hohlwelle, wobei eine möglichst direkte Führung der Flüssigkeit gegeben ist.

Die Erfindung wird nun anhand der Zeichnungen beispielhaft beschrieben.
Fig. 1 zeigt einen Scheibenfilter entsprechend dem Stand der Technik.
Fig. 2 zeigt einen Filtersektor mit einer strukturierten Filterplatte entsprechend dem Stand der Technik.
Fig. 3 zeigt eine vorteilhafte Ausführung eines Filtersektors.
Fig. 4 und Fig. 5 zeigen eine Filterplatte mit vorteilhaften Wölbstrukturen.
Fig. 6a und Fig. 6b zeigen zwei gegenüberliegend angeordnete Filterplatten mit vorteilhaften Wölbstrukturen.

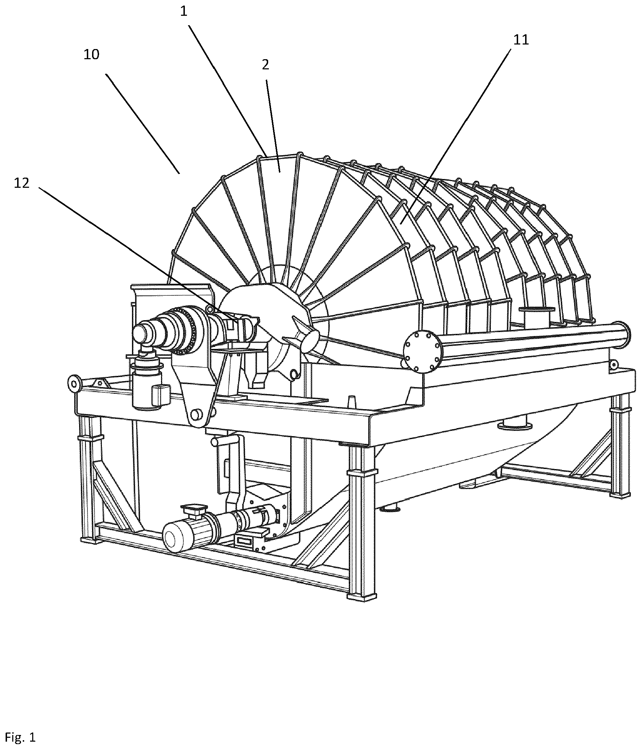

Fig. 1 zeigt einen Scheibenfilter entsprechend dem Stand der Technik. Dabei bilden mehrere Filtersektoren 1 eine Filterscheibe 11, wobei die Filterscheiben 11 zumindest teilweise in eine Suspension eintauchen. Die Filtersektoren 1 sind am Umfang einer Hohlwelle 12 befestigt und erstrecken sich im Wesentlichen in einer Radialrichtung und Umfangsrichtung der Hohlwelle 12. Die Filtersektoren 1 sind weiter über die Hohlwelle 12 besaugbar, wodurch Flüssigkeit aus der die Filtersektoren 1 umgebenden Suspension durch die Filterplatten 2 in den jeweiligen Innenraum 13 der Filtersektoren 1 abgetrennt werden kann. Entsprechend der Besaugung der Filtersektoren 1 über die Hohlwelle 12 wird die abgetrennte Flüssigkeit der Hohlwelle zugeführt.

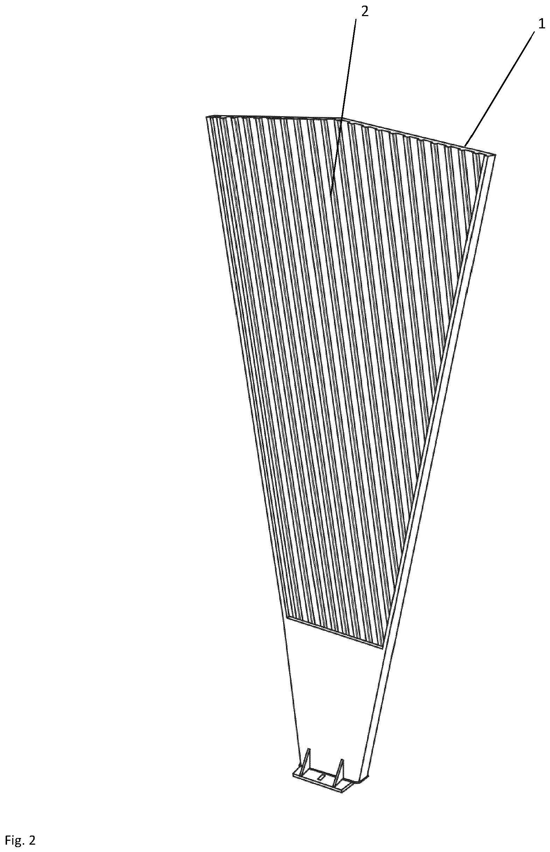

Fig. 2 zeigt einen Filtersektor 1 mit einer perforierten und strukturierten Filterplatte 2 entsprechend dem Stand der Technik. Dabei weist die Filterplatte 2 ein Wellenprofil auf, wobei das Wellenprofil Täler und Berge aufweist.

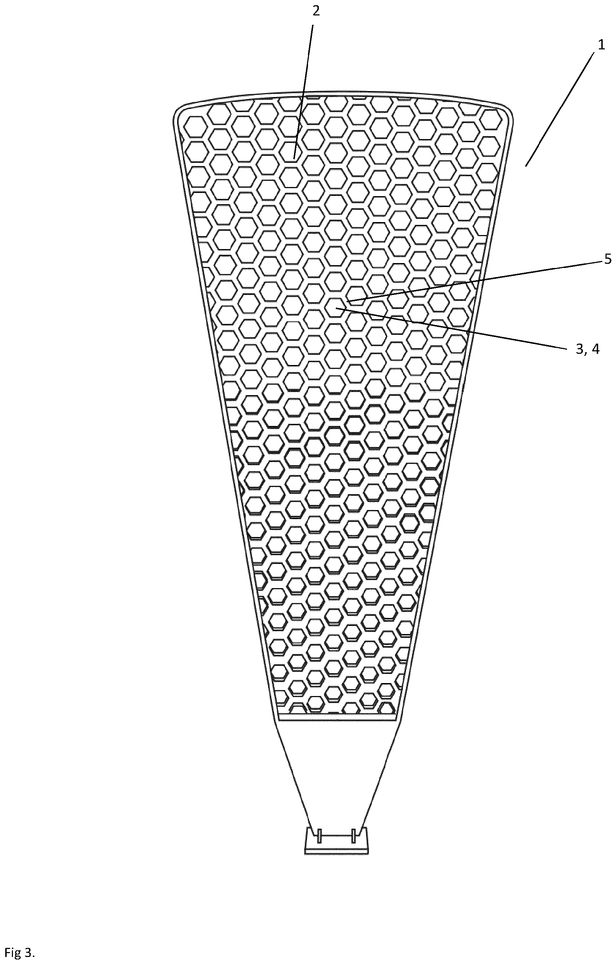

Fig. 3 zeigt eine vorteilhafte Ausführung eines Filtersektors 1. Der Filtersektor 1 umfasst eine perforierte und strukturierte Filterplatte 2, wobei der Innenraum 13 des Filtersektors 1 zumindest von den umgebenden Filterplatten 2 begrenzt wird. Erfindungsgemäß umfasst die Filterplatte zumindest eine Wölbstruktur 3 mit einer polygonalen Basis 4. Vorteilhafterweise ist die polygonale Basis 4 der Wölbstruktur 3 als Sechseck und insbesondere als gleichseitiges Sechseck ausgebildet, wobei die die Wölbstrukturen 3 in den Innenraum 13 des Filtersektors 1 orientiert sind. Vorteilhafterweise sind die Wölbstrukturen 3 aneinander angrenzend angeordnet, wobei jede Teilstrecke 5 der polygonalen Basis 4 einer ersten Wölbstruktur 3 auch als Teilstrecke der polygonalen Basis 4 der die erste Wölbstruktur 3 umgebenden Wölbstrukturen 3 ausgebildet ist.

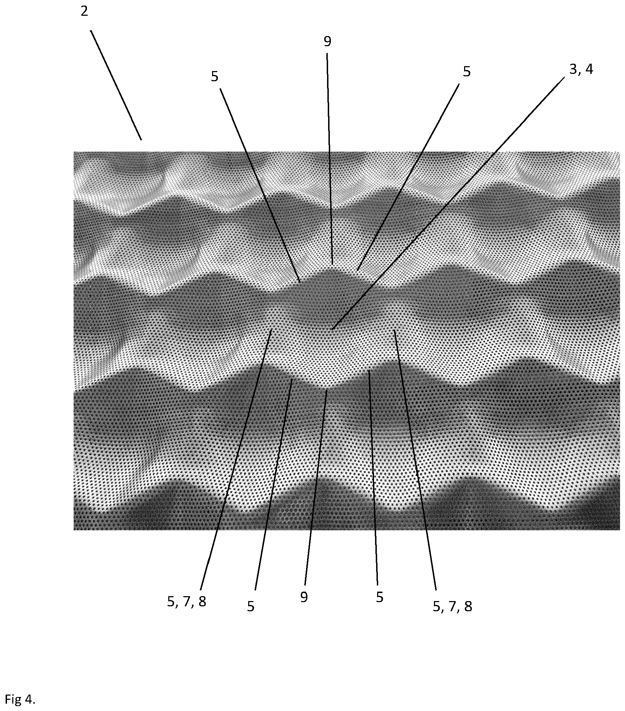

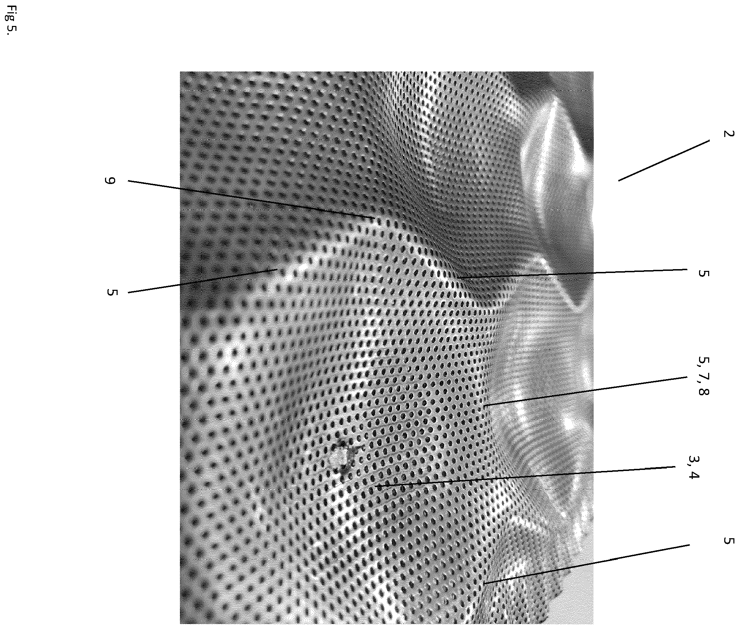

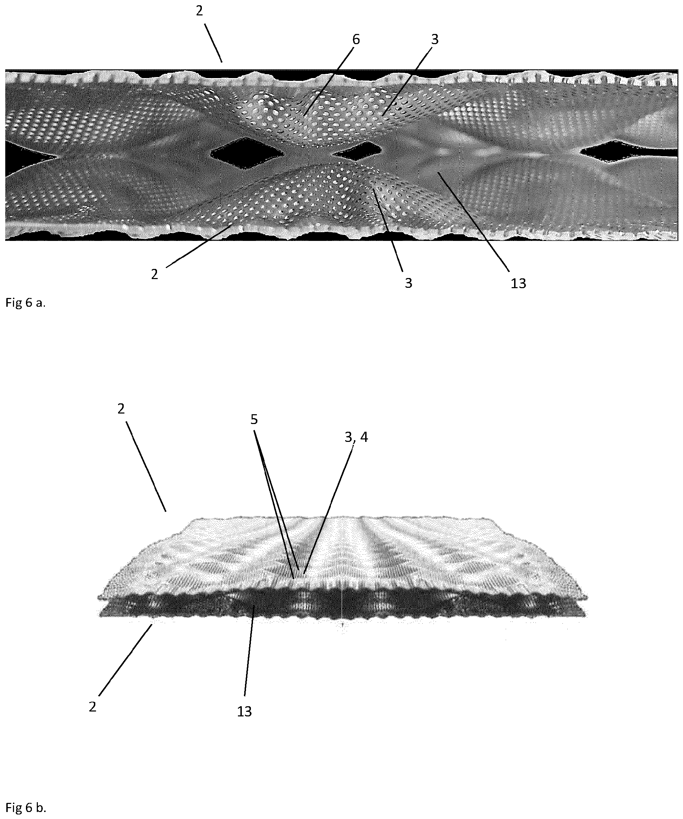

Fig. 4 und Fig. 5 zeigen eine Filterplatte 2 mit vorteilhaften Wölbstrukturen 3. Die Wölbstruktur 3 umfasst eine polygonale Basis 4, wobei die polygonale Basis 4 ein gleichseitiges Sechseck ist. Vorteilhafterweise ist die Wölbstruktur 3 mit einer Höhe 6 von bis zu 25 mm, bevorzugt bis zu 10 mm, über der Basis 4 ausgebildet, wobei die Filterplatte 2 Perforierungen mit einem hydraulischen Durchmesser von 0,2 mm bis 3 mm, bevorzugt 0,4 mm bis 0,8 mm und beispielsweise 0,6mm, aufweist. In Fig. 4 und Fig. 5 sind die Wölbstrukturen 3 aneinander angrenzend angeordnet, wobei jede Teilstrecke 5 der polygonalen Basis 4 einer ersten Wölbstruktur 3 auch als Teilstrecke der polygonalen Basis 4 der die erste Wölbstruktur 3 umgebenden Wölbstrukturen 3 ausgebildet ist. Vorteilhafterweise sind die einzelnen Wölbstrukturen so ausgestaltet, dass zwei einander gegenüberliegende Teilstrecken 5 als Sattelflächen 7 ausgebildet sind und die weiteren vier Teilstrecken 5 zwei gegenüberliegende Kammflächen 9 ausbilden, wobei jeweils zwei Teilstrecken 5 eine Kammfläche 9 bilden und die Kammflächen 9 durch die Sattelflächen 7 verbunden sind. Dabei liegen die weiteren vier Teilstrecken 5 der polygonalen Basis 4 im Wesentlichen in einer Ebene und ein jeweiliger Pass 8 der Sattelfläche 7 ist zwischen dieser Ebene und dem Innenraum 13 angeordnet Fig. 6a bzw. Fig. 6b zeigen zwei gegenüberliegend angeordnete Filterplatten 2 eines Filtersektors 1. Die Filterplatten 2 weisen die vorteilhaften Wölbstrukturen 3 auf. In Fig. 6a liegt die Blickrichtung parallel zu den Filterplatten. So ist der Innenraum 13 des Filtersektors 1 gut erkennbar, wie auch die von den Wölbstrukturen 3 über der jeweiligen Basis 4 ausgebildete Höhe 6. Fig. 6b ist eine Draufsicht auf einen Ausschnitt aus dem Filtersektor 1, wobei die gegenüberliegenden Filterplatten 2 und der Innenraum 13 erkennbar sind. Die gegenüberliegenden Filterplatten 2 sind beidseits des Innenraums 13 angeordnet. Dabei sind die Wölbstrukturen 3 der gegenüberliegenden Filterplatten 2 symmetrisch zum Innenraum 13 angeordnet und die Wölbstrukturen 3 der gegenüberliegenden Filterplatten 2 sind gespiegelt gegenüberliegend angeordnet. Ein vorteilhafter Scheibenfilter (nicht dargestellt) umfasst einen Filtersektor, wobei die Filterplatte 2 so zu einer Hohlwelle 12 (nicht dargestellt) ausgerichtet ist, dass eine Verbindungslinie der Mittelpunkte gegenüberliegender Teilstrecken 5 der Basis 4 der Wölbstrukturen 3 im Wesentlichen zur Hohlwelle 12 zeigt. Weiter können die gegenüberliegenden Filterplatten 2 symmetrisch bzw. gespiegelt zum Innenraum 13 angeordnet sein, wobei in einer besonders vorteilhaften Anordnung die Filterplatten 2 in radialer Richtung zur Hohlwelle 12 um eine halbe Basis 4 versetzt angeordnet sind.

Die vorliegende Erfindung bietet zahlreiche Vorteile. So ist eine Vergrößerung der Oberfläche der Filterplatten möglich bei gleichzeitig verbesserter Festigkeit bzw. Steifigkeit der Filterplatte. Dies erlaubt eine verbesserte Abscheidung bzw. Effizienz des Filtersektors, wobei der Materialeinsatz am Filtersektor reduziert werden kann. Ebenso erlaubt die Erfindung ein verbessertes Ablöseverhalten bzw. Abrollverhalten des Filterkuchens vom Filtersektor.

### Bezugszeichen

- (1): Filtersektor
- (2): Filterplatte
- (3): Wölbstruktur
- (4): Polygonale Basis
- (5): Teilstrecke
- (6): Höhe
- (7): Sattelfläche
- (8): Pass
- (9): Kammfläche
- (10): Scheibenfilter
- (11): Filterscheibe
- (12): Hohlwelle
- (13): Innenraum

## Patentansprüche

1. Filtersektor (1) für eine rotierende Filterscheibe (11) eines Scheibenfilters (10) umfassend zumindest eine perforierte und strukturierte Filterplatte (2) und einen Innenraum (13) des Filtersektors (1), wobei die Filterplatte (2) zur Abtrennung von Flüssigkeit aus einer Suspension über den Innenraum (13) des Filtersektors (1) besaugbar ist, **dadurch gekennzeichnet, dass** die Filterplatte (2) zumindest eine Wölbstruktur (3) mit einer polygonalen Basis (4) umfasst, wobei die polygonale Basis (4) der Wölbstruktur (3) ein Sechseck ist.

2. Filtersektor (1) nach Anspruch 1, **dadurch gekennzeichnet, dass** die polygonale Basis (4) der Wölbstruktur (3) ein gleichseitiges Sechseck ist.

3. Filtersektor (1) nach einem der vorhergehenden Ansprüche, **dadurch gekennzeichnet, dass** die Wölbstruktur (3) in den Innenraum (13) des Filtersektors (1) orientiert ist und somit aus dem Innenraum (13) in Richtung der Filterplatte (2) gesehen konvex ausgebildet ist.

4. Filtersektor (1) nach einem der vorhergehenden Ansprüche, **dadurch gekennzeichnet, dass** die Wölbstruktur (3) eine Höhe (6) von bis zu 25 mm, bevorzugt bis zu 10 mm, über der Basis (4) ausbildet.

5. Filtersektor (1) nach einem der vorhergehenden Ansprüche, **dadurch gekennzeichnet, dass** die Filterplatte (2) Perforierungen mit einem hydraulischen Durchmesser von 0,2 mm bis 3 mm, bevorzugt 0,4 mm bis 0,8 mm und beispielsweise 0,6 mm aufweist.

6. Filtersektor (1) nach Anspruch 1 bis 5, **dadurch gekennzeichnet, dass** eine Teilstrecke (5) der polygonalen Basis (4) einer ersten Wölbstruktur (3) zugleich als Teilstrecke (5) der polygonalen Basis (4) einer zweiten Wölbstruktur (3) ausgebildet ist.

7. Filtersektor (1) nach Anspruch 1 bis 6, **dadurch gekennzeichnet, dass** die polygonale Basis (4) einer ersten Wölbstruktur (3) aus Teilstrecken (5) gebildet ist, wobei jede Teilstrecke (5) der polygonalen Basis (4) der ersten Wölbstruktur (3) auch als Teilstrecke der polygonalen Basis (4) der die erste Wölbstruktur (3) umgebenden Wölbstrukturen (3) ausgebildet ist.

8. Filtersektor (1) nach Anspruch 2Anspruch 1 oder Anspruch 2, **dadurch gekennzeichnet, dass** das Sechseck aus sechs Teilstrecken (5) gebildet ist, wobei zwei einander gegenüberliegende Teilstrecken (5) als Sattelflächen (7) ausgebildet sind und die weiteren vier Teilstrecken (5) zwei gegenüberliegende Kammflächen (9) ausbilden, wobei jeweils zwei Teilstrecken (5) eine Kammfläche (9) bilden und die Kammflächen (9) durch die Sattelflächen (7) verbunden sind.

9. Filtersektor (1) nach Anspruch 8, **dadurch gekennzeichnet, dass** die weiteren vier Teilstrecken (5) der polygonalen Basis (4) im Wesentlichen in einer Ebene liegen und ein jeweiliger Pass (8) der Sattelfläche (7) zwischen der Ebene und dem Innenraum (13) angeordnet ist.

10. Filtersektor (1) nach einem der vorhergehenden Ansprüche, **dadurch gekennzeichnet, dass** die Strukturierung der Filterplatte (2) zumindest abschnittsweise variiert.

11. Filtersektor (1) nach einem der vorhergehenden Ansprüche, **dadurch gekennzeichnet, dass** der Filtersektor (1) kreissektorförmig ausgebildet ist.

12. Filtersektor (1) nach einem der vorhergehenden Ansprüche, **dadurch gekennzeichnet, dass** die perforierte und strukturierte Filterplatte (2) ein wölbstrukturiertes Lochblech ist.

13. Filtersektor (1) nach einem der vorhergehenden Ansprüche, **dadurch gekennzeichnet, dass** der Filtersektor (1) am Umfang einer Hohlwelle (12) befestigt ist und beidseits des Innenraums (13) einander gegenüberliegende Filterplatten (2) angeordnet sind, wobei die Wölbstrukturen (3) der gegenüberliegenden Filterplatten (2) entweder symmetrisch zum Innenraum (13) angeordnet sind oder zueinander in radialer Richtung zur Hohlwelle (12) um eine halbe Basis (4) versetzt angeordnet sind.

14. Ein Scheibenfilter (10) mit einer rotierenden Hohlwelle (12) und zumindest einer Filterscheibe (11), wobei die Filterscheibe (11) mehrere Filtersektoren (1) nach einem der Ansprüche 1 bis 13 umfasst, die Filtersektoren (1) am Umfang der Hohlwelle (12) befestigt sind und die Filtersektoren (1) über die Hohlwelle (12) besaugbar sind, wobei die aus einer Suspension abgetrennte Flüssigkeit aus dem Innenraum (13) des Filtersektors (1) der Hohlwelle (12) zuführbar ist.

15. Ein Scheibenfilter (10) nach Anspruch 14, wobei die Filterplatte (2) eine Vielzahl von aneinander angrenzenden Wölbstrukturen (3) umfasst, die Basis (4) der Wölbstrukturen (3) ein Sechseck und insbesondere ein gleichseitiges Sechseck ist, und die Filterplatte (2) so zur Hohlwelle (12) ausgerichtet ist, dass eine Verbindungslinie der Mittelpunkte gegenüberliegender Teilstrecken (5) der Basis (4) im Wesentlichen zur Hohlwelle (12) zeigt.

## Claims

1. Filter sector (1) for a rotating filter disc (11) of a disc filter (10) comprising at least one perforated and structured filter plate (2) and an interior space (13) of the filter sector (1), wherein the filter plate (2) can be suctioned via the interior space (13) of the filter sector (1) for separating liquid from a suspension, **characterised in that** the filter plate (2) comprises at least one arch structure (3) with a polygonal base (4) wherein the polygonal base (4) of the arch structure (3) is a hexagon.

2. Filter sector (1) according to claim 1, **characterised in that** the polygonal base (4) of the arch structure (3) is an equilateral hexagon.

3. Filter sector (1) according to one of the preceding claims, **characterised in that** the arch structure (3) is oriented into the interior space (13) of the filter sector (1) and is thus convex when viewed from the interior space (13) in the direction of the filter plate (2).

4. Filter sector (1) according to one of the preceding claims, **characterized in that** the arch structure (3) forms a height (6) of up to 25 mm, preferably up to 10 mm, above the base (4).

5. Filter sector (1) according to one of the preceding claims, **characterised in that** the filter plate (2) has perforations with a hydraulic diameter of 0.2 mm to 3 mm, preferably 0.4 mm to 0.8 mm and for example 0.6 mm.

6. Filter sector (1) according to claim 1 to 5, **characterised in that** a section (5) of the polygonal base (4) of a first arch structure (3) is simultaneously formed as a section (5) of the polygonal base (4) of a second arch structure (3).

7. Filter sector (1) according to claim 1 to 6, **characterised in that** the polygonal base (4) of a first arch structure (3) is formed from sections (5), wherein each section (5) of the polygonal base (4) of the first arch structure (3) is also formed as a section of the polygonal base (4) of the arch structures (3) surrounding the first arch structure (3).

8. Filter sector (1) according to claim 1 or claim 2, **characterised in that** the hexagon is formed from six sections (5), two mutually opposite sections (5) being formed as saddle surfaces (7) and the further four sections (5) forming two mutually opposite ridge surfaces (9), two sections (5) in each case forming a ridge surface (9) and the ridge surfaces (9) being connected by the saddle surfaces (7).

9. Filter sector (1) according to claim 8, **characterised in that** the further four sections (5) of the polygonal base (4) lie substantially in a plane and a respective pass (8) of the saddle surface (7) is arranged between the plane and the interior space (13).

10. Filter sector (1) according to one of the preceding claims, **characterised in that** the structuring of the filter plate (2) varies at least in sections.

11. Filter sector (1) according to one of the preceding claims, **characterised in that** the filter sector (1) is shaped as circular sector.

12. Filter sector (1) according to any one of the preceding claims, **characterised in that** the perforated and structured filter plate (2) is an arch structured perforated plate.

13. Filter sector (1) according to one of the preceding claims, **characterised in that** the filter sector (1) is fastened to the circumference of a hollow shaft (12) and mutually opposite filter plates (2) are arranged on both sides of the inner space (13), the arch structures (3) of the opposite filter plates (2) either being arranged symmetrically with respect to the inner space (13) or being arranged offset with respect to one another by half a base (4) in the radial direction with respect to the hollow shaft (12).

14. A disc filter (10) comprising a rotating hollow shaft (12) and at least one filter disc (11), wherein the filter disc (11) comprises several filter sectors (1) according to any one of claims 1 to 13, the filter sectors (1) are fastened to the circumference of the hollow shaft (12) and the filter sectors (1) can be suctioned via the hollow shaft (12), wherein the liquid separated from a suspension can be fed from the interior space (13) of the filter sector (1) to the hollow shaft (12).

15. A disc filter (10) according to claim 14, wherein the filter plate (2) comprises a plurality of adjacent arch structures (3), the base (4) of the arch structures (3) is a hexagon and in particular an equilateral hexagon, and the filter plate (2) is aligned with the hollow shaft (12) such that a connecting line of the centres of opposite sections (5) of the base (4) substantially points to the hollow shaft (12).

## Revendications

1. Secteur de filtre (1) pour un disque filtrant rotatif (11) d'un filtre à disques (10) comprenant au moins une plaque filtrante perforée et structurée (2) et un espace intérieur (13) du secteur de filtre (1), dans lequel la plaque filtrante (2) peut être soumise à une aspiration par l'intermédiaire de l'espace intérieur (13) du secteur de filtre (1) pour séparer le liquide d'une suspension, **caractérisé en ce que** la plaque filtrante (2) comprend au moins une structure incurvée (3) avec une base polygonale (4), dans lequel la base polygonale (4) de la structure incurvée (3) est un hexagone.

2. Secteur de filtre (1) selon la revendication 1, **caractérisé en ce que** la base polygonale (4) de la structure incurvée (3) est un hexagone équilatéral.

3. Secteur de filtre (1) selon l'une quelconque des revendications précédentes, **caractérisé en ce que** la structure incurvée (3) est orientée vers l'espace intérieur (13) du secteur de filtre (1) et est ainsi convexe lorsqu'elle est observée depuis l'espace intérieur (13) dans la direction de la plaque filtrante (2).

4. Secteur de filtre (1) selon l'une quelconque des revendications précédentes, **caractérisé en ce que** la structure incurvée (3) forme une hauteur (6) allant jusqu'à 25 mm, de préférence jusqu'à 10 mm, au-dessus de la base (4).

5. Secteur de filtre (1) selon l'une quelconque des revendications précédentes, **caractérisé en ce que** la plaque filtrante (2) comportent des perforations dont le diamètre hydraulique est compris entre 0,2 mm et 3 mm, de préférence entre 0,4 mm et 0,8 mm et par exemple est de 0,6 mm.

6. Secteur de filtre (1) selon la revendication 1 à 5, **caractérisé en ce qu'**un segment (5) de la base polygonale (4) d'une première structure incurvée (3) est réalisé simultanément sous la forme d'un segment (5) de la base polygonale (4) d'une seconde structure incurvée (3).

7. Secteur de filtre (1) selon la revendication 1 à 6, **caractérisé en ce que** la base polygonale (4) d'une première structure incurvée (3) est formée de segments (5), dans lequel chaque segment (5) de la base polygonale (4) de la première structure incurvée (3) est également réalisé sous la forme de segment de la base polygonale (4) des structures incurvées (3) entourant la première structure incurvée (3).

8. Secteur de filtre (1) selon la revendication 1 ou la revendication 2, **caractérisé en ce que** l'hexagone est formé de six segments, deux segments opposés l'un à l'autre (5) étant réalisés sous la forme de surfaces en forme de selle (7) et les autres quatre segments (5) formant deux surfaces de crête (9) opposées les unes aux autres, deux segments (5) formant respectivement une surface de crête (9) et les surfaces de crête (9) étant reliées par les surfaces en forme de selle (7).

9. Secteur de filtre (1) selon la revendication 8, **caractérisé en ce que** les autres quatre segments (5) de la base polygonale (4) se situent sensiblement dans un plan et un col respectif (8) de la surface en forme de selle (7) est disposé entre le plan et l'espace intérieur (13).

10. Secteur de filtre (1) selon l'une quelconque des revendications précédentes, **caractérisé en ce que** la structuration de la plaque filtrante (2) varie à certains endroits.

11. Secteur de filtre (1) selon l'une quelconque des revendications précédentes, **caractérisé en ce que** le secteur de filtre (1) se présente sous la forme de secteur circulaire.

12. Secteur de filtre (1) selon l'une quelconque des revendications précédentes, **caractérisé en ce que** la plaque filtrante performée et structurée (2) est une plaque perforée structurée incurvée.

13. Secteur de filtre (1) selon l'une quelconque des revendications précédentes, **caractérisé en ce que** le secteur de filtre (1) est fixé à la circonférence d'un arbre creux (12) et des plaques filtrantes (2) opposées les unes aux autres sont disposées de part et d'autre de l'espace intérieur (13), les structures incurvées (3) des plaques filtrante (2) opposées les unes aux autres étant disposées soit symétriquement par rapport à l'espace intérieur (13) soit étant décalées par rapport aux autres d'une demi-base (4) dans la direction radiale par rapport à l'arbre creux (12).

14. Filtre à disques (10) comprenant un arbre creux (12) et au moins un disque à filtres (11), dans lequel le disque à filtres (11) comprend une pluralité de secteurs de filtre (1) selon l'une quelconque des revendications 1 à 13, dans lequel les secteurs de filtre (1) sont fixés à la circonférence de l'arbre creux (12) et les secteurs de filtre (1) peuvent être soumis à une aspiration par l'intermédiaire de l'arbre creux (12), dans lequel le liquide séparé d'une suspension peut être amené depuis l'espace intérieur (13) du secteur de filtre (1) à l'arbre creux (12).

15. Filtre à disques (10) selon la revendication 14, dans lequel la plaque filtrante (2) comprend une pluralité de structures incurvées (3) adjacentes, la base (4) des structures incurvées (3) est un hexagone et en particulier un hexagone équilatéral, et la plaque filtrante (2) est alignée avec l'arbre creux (12) de sorte qu'une ligne de liaison des centres des segments (5) opposés les uns aux autres de la base (4) est dirigée sensiblement vers l'arbre creux (12).
